# EUROPEAN PATENT APPLICATION

(11) **EP 3 793 188 A1**
(43) Date of publication of application: **17.03.2021**
(21) Application number: 19819056.3
(22) Date of filing: 20.05.2019
(51) Int. Cl.: H04N 5/232

(54) **IMAGE PROCESSING METHOD, ELECTRONIC DEVICE, AND COMPUTER READABLE STORAGE MEDIUM**

(30) Priority: 15.06.2018 CN 201810618628
(71) Applicant: GUANGDONG OPPO MOBILE TELECOMMUNICATIONS CORP., LTD., Dongguan Guangdong 523860 (CN)
(72) Inventor: CHEN, Yan, Dongguan, Guangdong 523860 (CN)
(74) Representative: Manitz Finsterwald Patent- und Rechtsanwaltspartnerschaft mbB
(86) International application number: PCT/CN2019/087532
(87) International publication number: WO 2019/237887

(57) **Abstract**

A method for image processing is provided. The method includes the following. Scene detection is performed on an image to-be-captured to obtain at least one scene label of the image to-be-captured. A shutter priority mode is activated when the at least one scene label includes a preset label, where the preset label corresponds to a dynamic scene. A shutter speed is acquired, and the image to-be-captured is captured according to the shutter priority mode and the shutter speed.

## Description

### CROSS-REFERENCE TO RELATED APPLICATION(S)

This application claims priority to Chinese Patent Application No. 201810618628.6, filed on June 15, 2018, entitled "METHOD AND DEVICE FOR IMAGE PROCESSING, ELECTRONIC DEVICE, AND COMPUTER READABLE STORAGE MEDIUM", the entire disclosure of which is hereby incorporated by reference.

### TECHNICAL FIELD

This disclosure relates to the technical field of computer, and particularly to a method for image processing, an electronic device, and a computer readable storage medium.

### BACKGROUND

With the rapid development of computer technology, taking photos with mobile devices is becoming widespread. When people want to use a camera to take pictures of cats, dogs, and other objects with high moving speed, they can set a shooting mode of the camera to a high-speed shooting mode, so as to capture clearer images.

However, in the conventional technology, it is difficult to capture a required image in time.

### SUMMARY

Implementations of the disclosure provide a method for image processing, an electronic device, and a computer readable storage medium.

A method for image processing is provided. The method includes the following.

Scene detection is performed on an image to-be-captured to obtain at least one scene label of the image to-be-captured. A shutter priority mode is activated when the at least one scene label includes a preset label, where the preset label corresponds to a dynamic scene. A shutter speed is acquired, and the image to-be-captured is captured according to the shutter priority mode and the shutter speed.

An electronic device is provided. The electronic device includes a processor and a memory. The memory stores computer programs, which when executed by the processor, cause the processor to perform the following operations.

Scene detection is performed on an image to-be-captured to obtain at least one scene label of the image to-be-captured. A shutter priority mode is activated when the at least one scene label includes a preset label, where the preset label corresponds to a dynamic scene. A shutter speed is acquired, and the image to-be-captured is captured according to the shutter priority mode and the shutter speed.

A computer readable storage medium is provided. The computer readable storage medium stores computer programs, which when executed by a processor, implement the following operations.

Scene detection is performed on an image to-be-captured to obtain at least one scene label of the image to-be-captured. A shutter priority mode is activated when the at least one scene label includes a preset label, where the preset label corresponds to a dynamic scene. A shutter speed is acquired, and the image to-be-captured is captured according to the shutter priority mode and the shutter speed.

According to the method for image processing, the electronic device, and the computer readable storage medium of the implementations, scene detection is performed on the image to-be-captured to obtain the at least one scene label of the image to-be-captured; the shutter priority mode is activated when the at least one scene label includes the preset label, where the preset label corresponds to the dynamic scene; the shutter speed is acquired, and the image to-be-captured is captured according to the shutter priority mode and the shutter speed. As the shutter priority mode can be activated in the case that the image to-be-captured contains the dynamic scene, a required image can be captured.

The details of one or more implementations of the disclosure are set forth in the drawings and description below. Further features, objects, and advantages of the disclosure will become apparent from the description, drawings, and claims.

### BRIEF DESCRIPTION OF THE DRAWINGS

To describe technical solutions in implementations of the present disclosure more clearly, the following briefly introduces accompanying drawings required for illustrating the implementations. Apparently, the accompanying drawings in the following description illustrate some implementations of the present disclosure. Those of ordinary skill in the art may also obtain other drawings based on these accompanying drawings without creative efforts.
FIG. 1 is a schematic diagram illustrating an internal structure of the electronic device according to implementations.
FIG. 2 is a flow chart illustrating a method for image processing according to implementations.
FIG. 3 is a schematic structural diagram illustrating a neural network according to implementations.
FIG. 4 is a flow chart illustrating a method for image processing according to other implementations.
FIG. 5 is a flow chart illustrating a method for image processing according to other implementations.
FIG. 6 is a flow chart illustrating a method for image processing according to other implementations.
FIG. 7 is a flow chart illustrating a method for image processing according to other implementations.
FIG. 8 is a structural block diagram illustrating a device for image processing according to implementations.
FIG. 9 is a schematic diagram illustrating a circuit for image processing according to implementations.

### DETAILED DESCRIPTION

To more clearly understand purposes, technical schemes and advantages of this application, this application is described in further detail below in conjunction with the accompanying drawings and implementations. It is to be understood that the specific implementations described herein are merely illustrative and are not intended to limit this application.

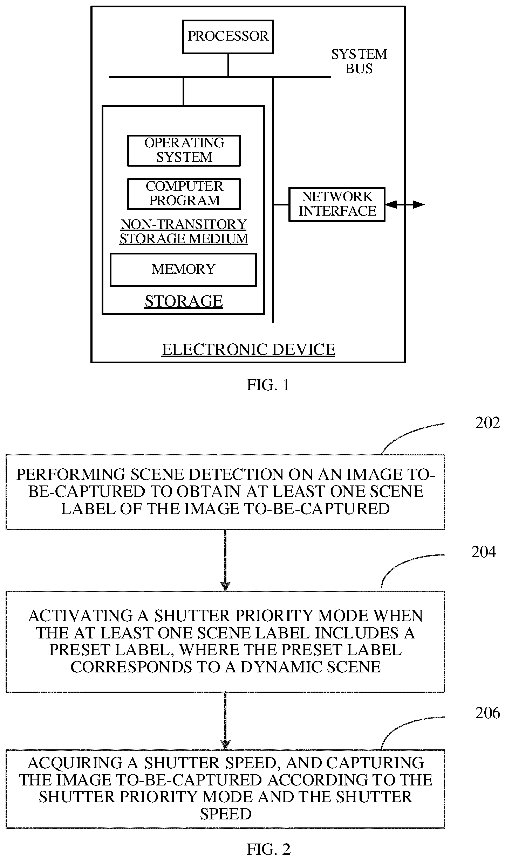

FIG. 1 is a schematic diagram illustrating an internal structure of an electronic device according to implementations. As illustrated in FIG. 1, the electronic device includes a processor, a storage, and a network interface which are connected through a system bus. The processor is configured to provide computing and control capabilities to support the operation of the entire electronic device. The storage is configured to store data, programs, and the like. At least one computer program is stored on the storage and may be executed by the processor to implement the method for image processing suitable for the electronic device of the implementations. The storage may include a non-transitory storage medium and a memory. The non-transitory storage medium stores an operating system and a computer program. The computer program may be executed by the processor to implement the method for image processing of the following implementations. The memory provides a cached fast operating environment for the operating system and the computer program in the non-transitory storage medium. The network interface may be an Ethernet card or a wireless card, etc. for communicating with external electronic devices. The electronic device may be a mobile terminal, a tablet computer or a personal digital assistant, or a wearable device, etc.

FIG. 2 is a flow chart illustrating a method for image processing according to implementations. The following describes the case where the method for image processing of the implementations is applied to the electronic device of FIG. 1 as an example. As illustrated in FIG. 2, the method begins at 202.

At 202, scene detection is performed on an image to-be-captured to obtain at least one scene label of the image to-be-captured.

The "image to-be-captured" (or preview image) refers to a picture generated by the electronic device capturing a current scene in real time through an imaging device. The image to-be-captured can be displayed on a display screen of the electronic device in real time. The electronic device performs scene detection such as scene recognition on the image to-be-captured, where the electronic device can train a scene recognition model according to deep learning algorithms such as VGG (visual geometry group), CNN (convolutional neural network), SSD (single shot multi-box detector), and decision tree and perform scene recognition on the image to-be-captured according to the scene recognition model. The scene recognition model generally includes an input layer, a hidden layer, and an output layer. The input layer is used to receive image input. The hidden layer is used to process the received image. The output layer is used to output a final result for image processing, that is, output a result for scene recognition of the image to-be-captured.

The scene of the image can be landscape, beach, blue sky, green grass, snow scene, fireworks, spotlight, text, portrait, baby, cat, dog, food, etc. The "scene label of the image to-be-captured" refers to a label of the scene of the image to-be-captured. In an example, the electronic device may determine the scene label of the image to-be-captured according to the result for scene recognition of the image to-be-captured. For example, when the result for scene recognition of the image to-be-captured is blue sky, the scene label of the image to-be-captured is blue sky.

After acquiring the image to-be-captured obtained by the imaging device, the electronic device may perform scene recognition on the image to-be-captured according to the scene recognition model and determine the at least one scene label of the image to-be-captured according to the result for scene recognition.

At 204, a shutter priority mode is activated when the at least one scene label includes a preset label, where the preset label corresponds to a dynamic scene.

The "dynamic scene" refers to a scene containing an object(s) that can move at high speed. The "preset label" refers to a label corresponding to a preset dynamic scene. In an example, the dynamic scene may include a scene containing cat, dog, fireworks, baby, etc., and accordingly, the corresponding preset label may include a cat-related scene label, a dog-related scene label, a fireworks-related scene label, a baby-related scene label, etc., which are not limited herein. The preset label included in the at least one scene label may be one or more than one. For example, the image to-be-captured may include two preset labels: the dog-related scene label and the cat-related scene label. The "shutter priority mode" refers to a shooting mode in which an exposure value is calculated by an automatic metering system of a device and then an aperture is automatically determined according to the selected shutter speed. The shutter priority mode is mainly used for shooting moving objects, where a clear image can be obtained.

The electronic device activates the shutter priority mode for capturing when the at least one scene label of the image to-be-captured includes the preset label.

At 206, a shutter speed is acquired, and the image to-be-captured is captured according to the shutter priority mode and the shutter speed.

The "shutter speed" refers to a duration from when a shutter is fully opened to when the shutter is fully closed. The shutter speed decides the length of exposure time. That is, the smaller the shutter speed, the shorter the exposure time of the image, which is suitable for shooting objects with a high moving speed. On the contrary, the greater the shutter speed, the longer the exposure time of the image, which is suitable for shooting objects with a low moving speed or still objects. The electronic device can acquire a shutter speed set by a user. In an example, after the shutter priority mode is activated, the electronic device may display on the display screen a slider for shutter speed selection, the user may select a corresponding shutter speed through the slider, and the electronic device may obtain the shutter speed selected by the user. The electronic device can also obtain a preset shutter speed. In an example, the electronic device can set shutter speeds corresponding to different preset labels according to moving speeds of different dynamic scenes. When the shutter priority mode is activated, the electronic device can obtain a corresponding shutter speed according to the preset label contained in the image to-be-captured. For example, the electronic device may set a shutter speed corresponding to the dog-related scene label (corresponding to a high moving speed) to 1/500 second, and a shutter speed corresponding to the baby-related scene label (corresponding to a low moving speed) to 1/125 second. When the electronic device detects that the image to-be-captured contains the dog-related scene label, the shutter priority mode is activated, the shutter speed (i.e., 1/500 second) corresponding to the dog-related scene label is acquired, and the image to-be-captured is captured.

The electronic device performs scene detection on the image to-be-captured to obtain the at least one scene label of the image to-be-captured. When the at least one scene label of the image to-be-captured includes the preset label, the electronic device activates the shutter priority mode. The electronic device acquires a corresponding shutter speed, and determines the aperture according to the exposure value and the shutter speed determined by the automatic metering system when the shutter priority mode is activated, to capture the image to-be-captured.

According to the implementations, scene detection is performed on the image to-be-captured to obtain the at least one scene label of the image to-be-captured; when the at least one scene label includes the preset label corresponding to the dynamic scene, the shutter priority mode is activated; the shutter speed is acquired, and the image to-be-captured is captured according to the shutter priority mode and the shutter speed. In view of the above, scene detection is performed on the image to-be-captured, the shutter priority mode is activated when the at least one scene label of the image to-be-captured includes the preset label, and the shutter speed is acquired for capturing. In this way, clear images that are needed can be captured, avoiding missing the needed images when setting the high-speed shooting mode.

In at least one implementation, scene detection is performed on the image to-be-captured to obtain the at least one scene label of the image to-be-captured as follows. Scene detection is performed on the image to-be-captured to obtain multiple scene labels of the image to-be-captured.

The electronic device can train a neural network that can output multiple scene labels. In an example, in the training of the neural network, a training image containing multiple training labels is input into the neural network. One or more features of the training image are extracted via the neural network. The one or more extracted features are detected, to obtain a predicted confidence level corresponding to each feature in the training image. A loss function is obtained according to the predicted confidence level and a true confidence level of the feature. The parameters of the neural network are adjusted according to the loss function. As a result, the trained neural network can subsequently simultaneously recognize scene labels corresponding to multiple features of the training image, thereby obtaining the neural network capable of outputting multiple scene labels. The confidence level is the level of confidence of a measured value of a measured parameter. The "true confidence level" refers to a confidence level of a specified scene category of the feature pre-labeled in the training image.

The electronic device can also train a neural network that can realize scene classification and object detection at the same time. In an example, in the training of the neural network, a training image containing at least one background training object and foreground training object can be input into the neural network. The neural network performs feature extraction according to the background training object and the foreground training object. The background training object is detected to obtain a first predicted confidence level, and a first loss function is obtained according to the first predicted confidence level and a first true confidence level. The foreground training object is detected to obtain a second predicted confidence level, and a second loss function is obtained according to the second predicted confidence level and a second true confidence level. According to the first loss function and the second loss function, a target loss function is obtained. The parameters of the neural network are adjusted according to the target loss function. As a result, the trained neural network can identify scene classification label and object classification label at the same time. The scene classification label and the object classification label are used as scene labels of the training image, so as to obtain the neural network that can detect a foreground region and a background region of the training image at the same time. The confidence level is the level of confidence of a measured value of a measured parameter. The "first true confidence level" refers to a confidence level of a specified scene category of a background image pre-labeled in the training image. The "second true confidence level" refers to a confidence level of a specified object category of a foreground object pre-labeled in the training image.

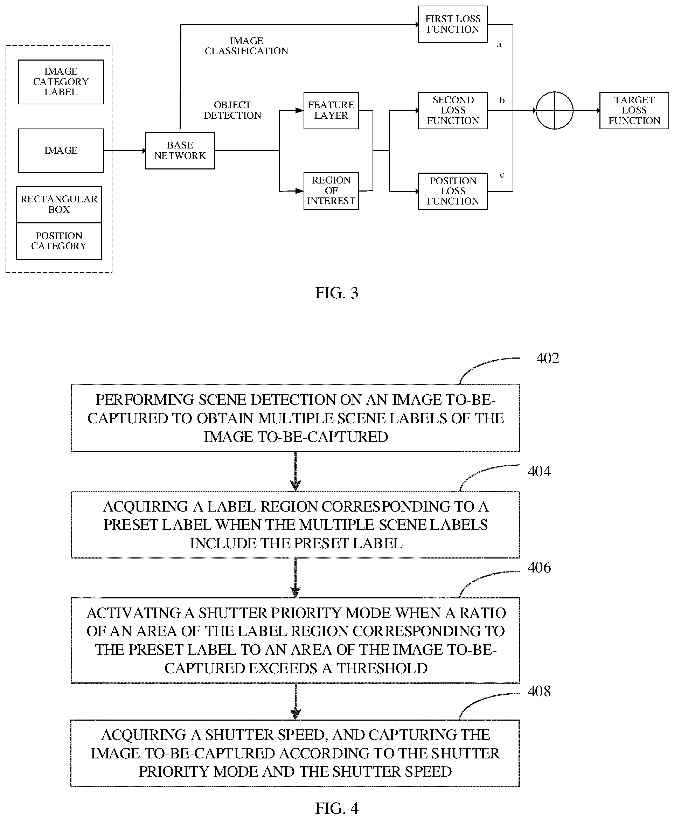

In at least one implementation, the neural network may include at least one input layer, a base network layer, a classification network layer, an object detection network layer, and two output layers. The two output layers may include a first output layer cascaded with the classification network layer, and a second output layer cascaded with the object detection network layer. In a training stage of the neural network, the input layer is used for receiving a training image. The first output layer is used for outputting a first predicted confidence level, which is detected via the classification network layer, of the specified scene category of the background image. The second output layer is used for outputting offset parameters, which are detected via the object detection network layer, of each pre-selected default boundary box relative to a true boundary box corresponding to the specified object category. The second output layer is further used for outputting a second predicted confidence level, which is detected via the object detection network layer, of the specified object category of the foreground object. FIG. 3 is a schematic structural diagram illustrating a neural network according to implementations. As illustrated in FIG.3, a training image with image category labels (i.e., a training image pre-labeled with a scene category and an object category) is received at an input layer of the neural network. One or more (image) features of the training image are extracted via a base network (e.g., a VGG network). The one or more extracted features are output to a feature layer. Category detection is performed on a background image via the feature layer to obtain a first loss function. Object detection is performed on a foreground object via the feature layer according to the one or more extracted features to obtain a second loss function. Position detection is performed on the foreground object via the feature layer to obtain a position loss function. A weighted summation of the first loss function, the second loss function, and the position loss function is calculated to obtain a target loss function. The neural network may include a data input layer, a base network layer, a scene classification network layer, an object detection network layer, and two output layers. The data input layer is used for receiving original image data. The base network layer is used to perform pre-processing and feature extraction on the image input by the data input layer. The pre-processing may include de-averaging, normalization, dimensionality reduction, and whitening. The de-averaging is to centralize each dimension of the data of the input image to 0, to make the center of the sample be the origin point of the coordinate system. The normalization is to normalize the amplitudes to the same range. The whitening is to normalize the amplitude on each feature axis of the data. Feature extraction may include, for example, using first five convolution layers of VGG 16 to perform feature extraction on the original image. The extracted one or more features are then input to the scene classification network layer and the object detection network layer. At the scene classification network layer, deep convolution and dot convolution of the Mobilenet network may be used to detect the one or more features of the input image, and then is input to the output layer to obtain the first predicted confidence level of the specified scene category of the background image in the input image, and then the first loss function is obtained according to the difference between the first predicted confidence level and the first true confidence level. At the object detection network layer, an SSD network may be used, and a convolution feature layer is cascaded after the first five convolution layers of VGG 16, and a set of convolution filters are used at the convolution feature layer, to predict the offset parameters of the pre-selected default boundary box relative to the true boundary box corresponding to the specified object category and the second predicted confidence level of the specified object category of the foreground object in the input image. A region of interest is the region of the pre-selected default boundary box. The position loss function may be constructed according to the offset parameters. The second loss function may be obtained according to the difference between the second predicted confidence level and the second true confidence level. Then, a weighted summation of the first loss function, the second loss function, and the position loss function is calculated to obtain the target loss function. According to the target loss function, a back propagation algorithm is used to adjust one or more parameters of the neural network to train the neural network.

The following describes using the trained neural network to recognize an image to-be-captured. The input image to-be-captured is received at the input layer of the neural network. One or more features of the image to-be-captured are extracted, and the one or more extracted features are input to the scene classification network layer for scene recognition. The confidence level of each specified scene category for the background image of the image to-be-captured is output via a softmax classifier at the first output layer. A scene category of which the confidence level is highest and greater than a confidence level threshold is selected as a scene classification label of the background image in the image to-be-captured. The extracted one or more features of the image to-be-captured are input to the object detection network layer for foreground object detection. The confidence level of each specified object category for the foreground object of the image to-be-captured and a corresponding position are output via a softmax classifier at the second output layer. An object category of which the confidence level is highest and greater than the confidence level threshold is selected as an object classification label of the foreground object in the image to-be-captured, and a position corresponding to the object classification label is output. The scene classification label and the object classification label are used as the multiple scene labels of the image to-be-captured.

As illustrated in FIG. 4, in at least one implementation, the provided method for image processing begins at 402.

At 402, scene detection is performed on an image to-be-captured to obtain multiple scene labels of the image to-be-captured.

At 404, a label region corresponding to a preset label is acquired when the multiple scene labels include the preset label.

After the image to-be-captured is detected by an image detection model such as a neural network, the neural network can output the scene label of the image to-be-captured and a position corresponding to the scene label. The image to-be-captured can have one or more scene labels. The electronic device can obtain the label region corresponding to the preset label in the image to-be-captured. Correspondingly, there may be one or more label regions corresponding to the preset label. In the case that the image to-be-captured contains a dog-related scene label and a blue sky-related scene label, if the preset label is the dog-related scene label, the electronic device can obtain a corresponding position of the dog-related scene label in the image to-be-captured as the label region. Furthermore, there may be multiple label regions corresponding to the dog-related scene label in the image to-be-captured.

At 406, a shutter priority mode is activated when a ratio of an area of the label region corresponding to the preset label to an area of the image to-be-captured exceeds a threshold.

The electronic device can detect the area of the label region according to a position of the label region in the image to-be-captured. In an example, the area of the label region corresponding to the preset label may be an area of each label region corresponding to the preset label in the image to-be-captured. In another example, the area of the label region corresponding to the preset label may be a sum of areas of all label regions corresponding to the preset label in the image to-be-captured. The area of the image to-be-captured can be calculated from the height and width of the image to-be-captured. In an example, the electronic device can directly read the height and width of the image to-be-captured, and calculate the area of the image to-be-captured. The threshold may be determined according to actual requirements, for example, it may be 0.5, 0.6, 0.7, etc., but not limited thereto.

The electronic device can activate the shutter priority mode of the electronic device when the ratio of the area of the label region of the image to-be-captured corresponding to the preset label to the area of the image to-be-captured exceeds the threshold.

At 408, a shutter speed is acquired, and the image to-be-captured is captured according to the shutter priority mode and the shutter speed.

In daily life, when people take pictures of a target object using a camera, they will shorten the distance between the target object and the camera, increase a proportion of the target object in the image, and highlight the target object in the image. Therefore, when the ratio of the area of the label region in the image to-be-captured to the area of the image to-be-captured is greater than the threshold, the electronic device can determine that an object of the image to-be-captured is in the label region. Thereby, the shutter priority mode is activated, the shutter speed is acquired, and the image to-be-captured is taken according to the shutter priority mode and the shutter speed. As a result, clear images that are needed can be captured, avoiding missing the needed images due to manually setting the high-speed shooting mode. On the contrary, when the ratio of the area of the label region in the image to-be-captured to the area of the image to-be-captured is less than the threshold, which means that the object of the image to-be-captured is not in the label region, the shutter priority mode is not activated for shooting.

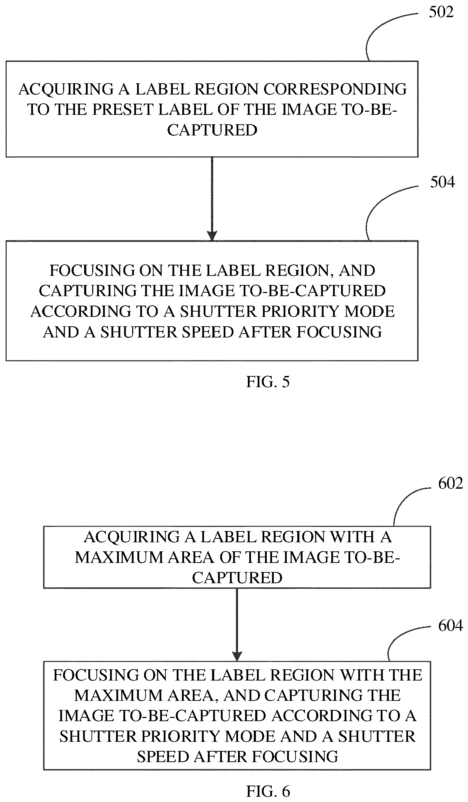

As illustrated in FIG. 5, in at least one implementation, the provided method for image processing further includes the following operations.

At 502, a label region corresponding to the preset label of the image to-be-captured is acquired.

At 504, focus on the label region corresponding to the preset label, and the image to-be-captured is captured according to a shutter priority mode and a shutter speed after focusing.

"Focusing" refers to adjusting the distance between the imaging device and the focal point of the electronic device to make the imaging of the object clear. The electronic device can focus (on) the label region, for example, through laser focus, phase focus, contrast focus, etc., which is not limited herein.

In the case that the at least one scene label of the image to-be-captured includes the preset label, the electronic device obtains the label region corresponding to the preset label, focuses on the label region corresponding to the preset label, and captures the image to-be-captured according to the activated shutter priority mode and the shutter speed after focusing. As such, the region corresponding to the preset label in the captured image can be clearer, and capturing effect of the image can be improved.

As illustrated in FIG. 6, in at least one implementation, the provided method for image processing further includes the following operations.

At 602, a label region with a maximum area of the image to-be-captured is acquired.

The electronic device can obtain a label region corresponding to each scene label in the image to-be-captured, calculate an area of the label region corresponding to each scene label, and obtain the label region with the maximum (or largest) area. The electronic device may also obtain a label region corresponding to each preset label in the image to-be-captured, calculate an area of the label region corresponding to each preset label, and obtain the label region with the maximum area.

At 604, focus on the label region with the maximum area, and the image to-be-captured is captured according to a shutter priority mode and a shutter speed after focusing.

The electronic device obtains the label region with the maximum area in the image to-be-captured, focuses on the label region with the maximum area, and captures the image to-be-captured according to the shutter priority mode and the shutter speed after focusing. It is possible to focus on the label region with the maximum area while increasing the shutter speed, capture needed images, and achieve clearer capturing effect of the label region with the maximum area in the captured image.

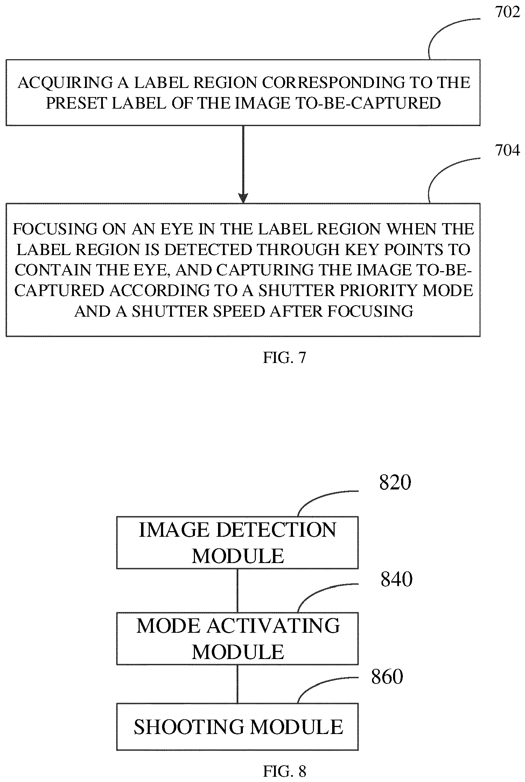

As illustrated in FIG. 7, in at least one implementation, the provided method for image processing further includes the following operations.

At 702, a label region corresponding to the preset label of the image to-be-captured is acquired.

At 704, focus on an eye in the label region corresponding to the preset label, when the label region corresponding to the preset label is detected through key points to contain the eye, and the image to-be-captured is captured according to a shutter priority mode and a shutter speed after focusing.

The electronic device can acquire the label region corresponding to the preset label of the image to-be-captured and perform key point detection on the label region corresponding to the preset label. For example, the electronic device can use the *dlib* algorithm for key point detection. In the training process of the key point detection algorithm, the electronic device can obtain point coordinates of an eye(s) in a training image, and perform key point labeling on the point coordinates, and then use the *dlib* algorithm to train the training image. Therefore, after the electronic device obtains the label region corresponding to the preset label of the image to-be-captured, the electronic device uses the trained key point detection algorithm to detect the label region corresponding to the preset label and outputs the detected key point label of the eye. In one example, the electronic device can also use ASM (active shape model), cascaded shape regression model, deep learning algorithm such as DCNN (dynamic convolutional neural network) to perform key point detection. Since the electronic device detects the label region corresponding to the preset label of the image to-be-captured, efficiency of key point detection can be improved.

When the label region corresponding to the preset label does not contain the eye, the electronic device focuses on the label region, which can capture a clearer image of the label region. When the electronic device detects that the label region corresponding to the preset label contains the eye, the electronic device focuses on the eye in the label region, and capture the image to-be-captured according to the shutter priority mode and the shutter speed after focusing, to obtain an image with the eye as the focus, such that a more vivid image can be obtained. For example, when the preset label in the image to-be-captured is a baby-related scene label, the electronic device determines through key point detection that the image to-be-captured contains the eye and obtains corresponding positions of the eye, focuses and captures the eye of the image to-be-captured, such that the obtained image can show agility of the baby.

In at least one implementation, the preset label includes at least one of a cat-related scene label and a dog-related scene label.

With the improvement of people's living standards, cats and dogs have become indispensable playmates in many people's daily lives, and capturing cats and dogs through a camera has become one of people's entertainment manners. Due to the fast movement of cats and dogs, when people directly use the camera to capture them, the captured images are easily blurred. However, if people begins to capture after setting the camera to the high-speed shooting mode, as it takes a certain amount of time to set the camera to the high-speed shooting mode, it is possible to miss some wonderful pictures of cats and dogs during setting. According to the implementations, scene detection is performed on the image to-be-captured to obtain the at least one scene label of the image to-be-captured; when the at least one scene label of the image to-be-captured includes at least one of the cat-related scene label and the dog-related scene label, the shutter priority mode is automatically activated; the corresponding shutter speed is acquired to capture the image to-be-captured. As there is no need to manually set the shooting mode, it is possible to avoid missing the wonderful pictures of cats and dogs and get clear images.

In an example, when the electronic device detects that the image to-be-captured includes at least one of the cat-related scene label and the dog-related scene label, the electronic device can acquire a label region corresponding to the cat-related scene label (and/)or the dog-related scene label, detect a position of the eye of the cat or dog in the label region, focus on the eye, and capture the image to-be-captured according to the shutter priority mode and the shutter speed. As such, focus of capturing can be on the eye of the cat or dog and images showing the agility of the cat or dog can be obtained.

In at least one implementation, a method for image processing is provided. The method includes the following operations.

In at least one implementation, the electronic device performs scene detection on an image to-be-captured to obtain at least one scene label of the image to-be-captured. The "image to-be-captured" refers to a picture generated by the electronic device capturing a current scene in real time through an imaging device. The electronic device performs scene recognition on the image to-be-captured, where the electronic device can train a scene recognition model according to deep learning algorithms such as VGG, CNN, SSD, and decision tree and perform scene recognition on the image to-be-captured according to the scene recognition model. The scene of the image can be landscape, beach, blue sky, green grass, snow scene, fireworks, spotlight, text, portrait, baby, cat, dog, food, etc. After acquiring the image to-be-captured obtained by the imaging device, the electronic device may perform scene recognition on the image to-be-captured according to the scene recognition model and determine the scene label of the image to-be-captured according to the result for scene recognition.

In at least one implementation, the electronic device performs scene detection on the image to-be-captured to obtain multiple scene labels of the image to-be-captured. The electronic device can also train a neural network that can realize scene classification and object detection at the same time. One or more features of the image to-be-captured are extracted via a base network of a neural network. The one or more extracted features are output to a classification network layer and an object detection network layer. Scene recognition is performed at the classification network layer, the confidence level of each specified scene category for a background image of the image to-be-captured is output. A scene category of which the confidence level is highest and greater than a confidence level threshold is selected as a scene classification label of the background image in the image to-be-captured. Object detection is performed at the object detection network layer, the confidence level of each specified object category for a foreground object of the image to-be-captured is output. An object category of which the confidence level is highest and greater than the confidence level threshold is selected as an object classification label of the foreground object in the image to-be-captured, and a position corresponding to the object classification label is output. The scene classification label and the object classification label are used as the multiple scene labels of the image to-be-captured.

In at least one implementation, the electronic device activates a shutter priority mode when the at least one scene label includes a preset label, where the preset label corresponds to a dynamic scene. The "dynamic scene" refers to a scene containing an object(s) that can move at high speed. The "preset label" refers to a label corresponding to a preset dynamic scene. The preset label included in the at least one scene label may be one or more than one. The electronic device activates the shutter priority mode to perform capturing when the at least one scene label of the image to-be-captured includes the preset label.

In at least one implementation, the preset label includes at least one of a cat-related scene label and a dog-related scene label. The electronic device can perform scene detection on the image to-be-captured to obtain the at least one scene label of the image to-be-captured. When the at least one scene label of the image to-be-captured includes at least one of the cat-related scene label and the dog-related scene label, the electronic device can automatically activate the shutter priority mode. The electronic device can acquire the corresponding shutter speed to capture the image to-be-captured. As there is no need to manually set the shooting mode, it is possible to avoid missing the wonderful pictures of cats and dogs and get clear images.

In at least one implementation, the electronic device acquires a label region corresponding to the preset label when the multiple scene labels include the preset label. The electronic device activates the shutter priority mode when a ratio of an area of the label region corresponding to the preset label to an area of the image to-be-captured exceeds a threshold. When the ratio of the area of the label region in the image to-be-captured to the area of the image to-be-captured exceeds the threshold, the electronic device can determine that an object of the image to-be-captured is in the label region. Thereby, the shutter priority mode is activated, the shutter speed is acquired, and the image to-be-captured is taken according to the shutter priority mode and the shutter speed. As a result, clear images that are needed can be captured, avoiding missing the needed images due to manually setting the high-speed shooting mode.

In at least one implementation, the electronic device acquires a shutter speed, and captures the image to-be-captured according to the shutter priority mode and the shutter speed. The electronic device can acquire a shutter speed set by a user. In an example, after the shutter priority mode is activated, the electronic device may display on the display screen a slider for shutter speed selection, the user may select a corresponding shutter speed through the slider, and the electronic device may obtain the shutter speed selected by the user. The electronic device can also obtain a preset shutter speed. In an example, the electronic device can set shutter speeds corresponding to different preset labels according to moving speeds of different dynamic scenes. When the shutter priority mode is activated, the electronic device can obtain a corresponding shutter speed according to the preset label contained in the image to-be-captured. The electronic device acquires the corresponding shutter speed, and determines the aperture according to the exposure value and the shutter speed determined by the automatic metering system when the shutter priority mode is activated, to capture the image to-be-captured.

In at least one implementation, the electronic device focuses on a label region corresponding to the preset label of the image to-be-captured and captures the image to-be-captured according to the shutter priority mode and the shutter speed after focusing. In the case that the at least one scene label of the image to-be-captured includes the preset label, the electronic device obtains the label region corresponding to the preset label, focuses on the label region corresponding to the preset label, and captures the image to-be-captured according to the activated shutter priority mode and the shutter speed after focusing. As such, the region corresponding to the preset label in the captured image can be clearer, and capturing effect of the image can be improved.

In at least one implementation, the electronic device acquires a label region with a maximum area of the image to-be-captured. The electronic device focuses on the label region with the maximum area, and captures the image to-be-captured according to the shutter priority mode and the shutter speed after focusing. The electronic device obtains the label region with the maximum area in the image to-be-captured, focuses on the label region with the maximum area, and captures the image to-be-captured according to the shutter priority mode and the shutter speed after focusing. It is possible to focus on the label region with the maximum area while increasing the shutter speed, capture needed images, and achieve clearer capturing effect of the label region with the maximum area in the captured image.

In at least one implementation, the electronic device focuses on an eye in the label region corresponding to the preset label when the label region corresponding to the preset label is detected through key points to contain the eye. The electronic device captures the image to-be-captured according to the shutter priority mode and the shutter speed after focusing. The electronic device can acquire the label region corresponding to the preset label of the image to-be-captured and perform key point detection on the label region corresponding to the preset label. When the electronic device detects that the label region corresponding to the preset label contains the eye, the electronic device focuses on the eye in the label region, and capture the image to-be-captured according to the shutter priority mode and the shutter speed after focusing, to obtain an image with the eye as the focus, such that a more vivid image can be obtained.

Although the actions in the flowcharts of FIG. 2 and FIGs. 4-7 are illustrated in sequence as indicated by the arrows, these actions are not necessarily performed in sequence as indicated by the arrows. Unless explicitly stated herein, the execution of these actions is not strictly limited in sequence, and these actions may be executed in other sequence. Moreover, at least part of the actions in FIG. 2 and FIGs. 4-7 may include multiple sub-actions or stages, which may not necessarily be completed at the same time, but may be performed at different times, and the sequence of execution of these sub-actions or stages may not necessarily be performed sequentially, but may be performed alternately with at least part of the sub-actions or stages of other actions or other actions.

FIG. 8 is a structural block diagram illustrating a device for image processing according to implementations. As illustrated in FIG. 8, a device for image processing is provided. The device includes an image detection module 820, a mode activating module 840, and a shooting module 860.

The image detection module 820 is configured to perform scene detection on an image to-be-captured to obtain at least one scene label of the image to-be-captured. The mode activating module 840 is configured to activate a shutter priority mode when the at least one scene label includes a preset label, where the preset label corresponds to a dynamic scene. The shooting module 860 is configured to acquire a shutter speed, and capture the image to-be-captured according to the shutter priority mode and the shutter speed.

In an example, the image detection module 820 is configured to perform scene detection on the image to-be-captured to obtain multiple scene labels of the image to-be-captured.

In an example, the image detection module 820 is configured to acquire a label region corresponding to the preset label when the multiple scene labels include the preset label. The mode activating module 840 is configured to activate the shutter priority mode when a ratio of an area of the label region corresponding to the preset label to an area of the image to-be-captured exceeds a threshold. The shooting module 860 is configured to acquire the shutter speed, and capture the image to-be-captured according to the shutter priority mode and the shutter speed.

In an example, the image detection module 820 is configured to acquire a label region corresponding to the preset label of the image to-be-captured. The shooting module 860 is configured to focus on the label region corresponding to the preset label, and capture the image to-be-captured according to the shutter priority mode and the shutter speed after focusing.

In an example, the image detection module 820 is configured to acquire a label region with a maximum area of the image to-be-captured. The shooting module 860 is configured to focus on the label region with the maximum area, and capture the image to-be-captured according to the shutter priority mode and the shutter speed after focusing.

In an example, the image detection module 820 is configured to acquire a label region corresponding to the preset label of the image to-be-captured. The shooting module 860 is configured to: focus on an eye in the label region corresponding to the preset label when the label region corresponding to the preset label is detected through key points to contain the eye and capture the image to-be-captured according to the shutter priority mode and the shutter speed after focusing.

In an example, the mode activating module 840 is configured to activate the shutter priority mode when the at least one scene label includes the preset label, where the preset label includes at least one of a cat-related scene label and a dog-related scene label.

The division of each module in the device for image processing described above is only used for illustration. In other implementations, the device for image processing can be divided into different modules as needed to complete all or part of the functions of the device for image processing.

For the specific definition of the device for image processing, reference is made to the above definition of the method for image processing, which will not be repeated herein. All or part of the modules in the above-mentioned device for image processing may be implemented by software, hardware, and a combination thereof. The foregoing modules may be embedded in or independent from a processor of a computer equipment in the form of hardware, or may be stored in a memory of the computer equipment in the form of software, so that the processor can invoke and execute the operations corresponding to the foregoing modules.

The modules in the device for image processing of the implementations may be implemented by a computer program. The computer program can be run on a terminal or a server. The program module composed of the computer program can be stored in a memory of the terminal or the server. When the computer program is executed by the processor, the operations of the method described in the implementations are realized.

Implementations also provide a computer-readable storage medium. One or more non-transitory computer-readable storage media contain computer-executable instructions which, when executed by one or more processors, cause the one or more processors to perform the operations of the method for image processing.

A computer program containing instructions is provided. When run by a computer, the instructions cause the computer to perform the method for image processing.

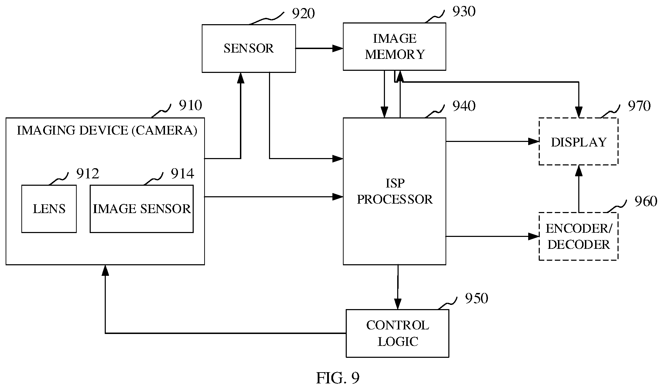

Implementations further provide an electronic device. The above electronic device includes a circuit for image processing. The circuit for image processing may be implemented by hardware and/or software components, and may include various processing units defining image signal processing (ISP) pipelines. FIG. 9 is a schematic diagram illustrating a circuit for image processing according to implementations. In FIG. 9, only aspects of the image processing technology related to the implementations are illustrated for ease of illustration.

As illustrated in FIG. 9, the circuit for image processing includes an ISP processor 940 and a control logic 950. Image data captured by an imaging device 910 is first processed by the ISP processor 940. The ISP processor 940 is configured to analyze the image data to capture image statistics that can be used to determine one or more control parameters of the imaging device 910. The imaging device 910 may include a camera having one or more lenses 912 and an image sensor 914. The image sensor 914 may include an array of color filters (e.g., Bayer filters). The image sensor 914 may be configured to acquire light intensity and wavelength information captured with each imaging pixel of the image sensor 914 and provide a set of original image data that may be processed by the ISP processor 940. A sensor 920 (e.g., gyro-sensor) may provide obtained image processing parameters (e.g., anti-shake parameters) to the ISP processor 940 based on the interface type of the sensor 920. The interface of the sensor 920 may utilize a standard mobile imaging architecture (SMIA) interface, other serial or parallel camera interfaces, or a combination of the above interfaces.

In addition, the image sensor 914 may also send the original image data to the sensor 920, and the sensor 920 may provide the original image data to the ISP processor 940 based on the interface type of the sensor 920, or the sensor 920 may store the original image data in an image memory 930.

The ISP processor 940 processes the original image data pixel by pixel in various formats. For example, each image pixel may have a bit depth of 8, 10, 12, or 14 bits. The ISP processor 940 may perform one or more image processing operations on the original image data and collect statistical information related to the image data. The image processing operation can be performed with the same or different bit depth accuracy.

The ISP processor 940 may also receive image data from the image memory 930. For example, the interface of the sensor 920 sends the original image data to the image memory 930, and the original image data in the image memory 930 is provided to the ISP processor 940 for processing. The image memory 930 may be a part of a memory device, or a separate dedicated memory within a memory equipment or an electronic device, and may include direct memory access (DMA) feature.

Upon receiving the original image data from the interface of the image sensor 914 or from the interface of the sensor 920 or from the image memory 930, the ISP processor 940 may perform one or more image processing operations, such as time domain filtering. The processed image data may be sent to the image memory 930 for further processing before being displayed. The ISP processor 940 may receive processing data from the image memory 930 and process the processing data in original domain and in RGB and YCbCr color spaces. The image data processed by the ISP processor 940 may be output to a display 970 for viewing by the user and/or further processed by a graphics engine or graphics processing unit (GPU). In addition, the output of the ISP processor 940 may also be sent to the image memory 930, and the display 970 can read the image data from the image memory 930. In an example, the image memory 930 may be configured to implement one or more frame buffers. In addition, the output of the ISP processor 940 may be sent to an encoder/decoder 960 to encode/decode the image data. The encoded image data may be saved and decompressed before being displayed on the display 970. The encoder/decoder 960 may be implemented by a central processing unit (CPU) or GPU or coprocessor.

The statistic data determined by the ISP processor 940 may be sent to the control logic 950. For example, the statistical data may include statistical information of the image sensor 914, such as auto exposure, auto white balance, auto focus, flicker detection, black level compensation, shadow correction of the lens 912, etc. The control logic 950 may include a processor and/or microcontroller that performs one or more routines (e.g., firmware), where the one or more routines may determine control parameters of the imaging device 910 and control parameters of the ISP processor 940 according to received statistics. For example, the control parameters of the imaging device 910 may include control parameters of the sensor 920 (e.g., gain, integration time of exposure control, anti-shake parameters, etc.), flash control parameters, of the camera, control parameters of the lens 912 (e.g., focus or zoom focus), or a combination of these parameters. The control parameters of the ISP processor may include gain levels and color correction matrices for automatic white balance and color adjustment (e.g., during RGB processing), and shadow correction parameters of the lens 912.

The electronic device can implement the operations of the method for image processing described in the foregoing implementations according to the foregoing image processing technology.

Any references to memory, storage, databases, or other media used in this application may include a non-transitory memory and/or transitory memory. The suitable non-transitory memory may include read only memory (ROM), programmable ROM (PROM), electrically programmable ROM (EPROM), electrically erasable programmable ROM (EEPROM), or flash memory. The transitory memory may include a random access memory (RAM), which is served as an external cache memory. By way of illustration but not limitation, RAM is available in various forms, such as static RAM (SRAM), dynamic RAM (DRAM), synchronous DRAM (SDRAM), double data rate SDRAM (DDR SDRAM), enhanced SDRAM (ESDRAM), synchronous link DRAM (SLDRAM), memory bus direct RAM (RDRAM), direct memory bus dynamic RAM (DRDR AM), and memory bus dynamic RAM (RDRAM).

While the disclosure has been described in connection with certain implementations, it is to be understood that the disclosure is not to be limited to the disclosed implementations but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A method for image processing, comprising:
performing scene detection on an image to-be-captured to obtain at least one scene label of the image to-be-captured;
activating a shutter priority mode when the at least one scene label comprises a preset label, wherein the preset label corresponds to a dynamic scene; and
acquiring a shutter speed, and capturing the image to-be-captured according to the shutter priority mode and the shutter speed.

2. The method of claim 1, wherein performing scene detection on the image to-be-captured to obtain the at least one scene label of the image to-be-captured comprises:
performing scene detection on the image to-be-captured to obtain a plurality of scene labels of the image to-be-captured.

3. The method of claim 2, wherein performing scene detection on the image to-be-captured to obtain the plurality of scene labels of the image to-be-captured comprises:
inputting the image to-be-captured into a neural network;
performing scene detection on the image to-be-captured through the neural network to obtain a scene classification label to which a background of the image to-be-captured belongs;
performing object detection network on the image to-be-captured through the neural network to obtain an object classification label to which a foreground of the image to-be-captured belongs; and
using the scene classification label and the object classification label as the plurality of scene labels of the image to-be-captured.

4. The method of claim 2, further comprising:
acquiring a label region corresponding to the preset label when the plurality of scene labels comprise the preset label;
activating the shutter priority mode when a ratio of an area of the label region corresponding to the preset label to an area of the image to-be-captured exceeds a threshold; and
acquiring the shutter speed, and capturing the image to-be-captured according to the shutter priority mode and the shutter speed.

5. The method of any of claims 1-4, wherein capturing the image to-be-captured according to the shutter priority mode and the shutter speed comprises:
acquiring a label region corresponding to the preset label of the image to-be-captured; and
focusing on the label region corresponding to the preset label, and capturing the image to-be-captured according to the shutter priority mode and the shutter speed after focusing.

6. The method of claim 1, wherein capturing the image to-be-captured according to the shutter priority mode and the shutter speed comprises:
acquiring a label region with a maximum area of the image to-be-captured; and
focusing on the label region with the maximum area, and capturing the image to-be-captured according to the shutter priority mode and the shutter speed after focusing.

7. The method of claim 1, wherein capturing the image to-be-captured according to the shutter priority mode and the shutter speed comprises:
acquiring a label region corresponding to the preset label of the image to-be-captured;
focusing on an eye in the label region corresponding to the preset label when the label region corresponding to the preset label is detected through key points to contain the eye; and
capturing the image to-be-captured according to the shutter priority mode and the shutter speed after focusing.

8. The method of claim 1, wherein the preset label comprises at least one of a cat-related scene label and a dog-related scene label.

9. The method of claim 1, wherein acquiring the shutter speed comprises:
acquiring the shutter speed corresponding to the preset label comprised in the at least one scene label according to preset shutter speeds corresponding to different preset labels.

10. An electronic device, comprising a processor and a memory storing computer programs, which when executed by the processor, cause the processor to
perform scene detection on an image to-be-captured to obtain at least one scene label of the image to-be-captured;
activate a shutter priority mode when the at least one scene label comprises a preset label, wherein the preset label corresponds to a dynamic scene; and
acquire a shutter speed, and capture the image to-be-captured according to the shutter priority mode and the shutter speed.

11. The electronic device of claim 10, wherein the computer programs executed by the processor to perform scene detection on the image to-be-captured to obtain the at least one scene label of the image to-be-captured are executed by the processor to
perform scene detection on the image to-be-captured to obtain a plurality of scene labels of the image to-be-captured.

12. The electronic device of claim 11, wherein the computer programs executed by the processor to perform scene detection on the image to-be-captured to obtain the plurality of scene labels of the image to-be-captured are executed by the processor to
input the image to-be-captured into a neural network;
perform scene detection on the image to-be-captured through the neural network to obtain a scene classification label to which a background of the image to-be-captured belongs;
perform object detection network on the image to-be-captured through the neural network to obtain an object classification label to which a foreground of the image to-be-captured belongs; and
use the scene classification label and the object classification label as the plurality of scene labels of the image to-be-captured.

13. The electronic device of claim 11, wherein the computer programs are further executed by the processor to
acquire a label region corresponding to the preset label when the plurality of scene labels comprise the preset label;
activate the shutter priority mode when a ratio of an area of the label region corresponding to the preset label to an area of the image to-be-captured exceeds a threshold; and
acquire the shutter speed, and capture the image to-be-captured according to the shutter priority mode and the shutter speed.

14. The electronic device of any of claims 10-13, wherein the computer programs executed by the processor to capture the image to-be-captured according to the shutter priority mode and the shutter speed are executed by the processor to
acquire a label region corresponding to the preset label of the image to-be-captured; and
focus on the label region corresponding to the preset label, and capture the image to-be-captured according to the shutter priority mode and the shutter speed after focusing.

15. The electronic device of claim 10, wherein the computer programs executed by the processor to capture the image to-be-captured according to the shutter priority mode and the shutter speed are executed by the processor to
acquire a label region with a maximum area of the image to-be-captured; and
focus on the label region with the maximum area, and capture the image to-be-captured according to the shutter priority mode and the shutter speed after focusing.

16. The electronic device of claim 10, wherein the computer programs executed by the processor to capture the image to-be-captured according to the shutter priority mode and the shutter speed are executed by the processor to
acquire a label region corresponding to the preset label of the image to-be-captured;
focus on an eye in the label region corresponding to the preset label when the label region corresponding to the preset label is detected through key points to contain the eye; and
capture the image to-be-captured according to the shutter priority mode and the shutter speed after focusing.

17. The electronic device of claim 10, wherein the computer programs executed by the processor to activate the shutter priority mode when the at least one scene label comprises the preset label are executed by the processor to
activate the shutter priority mode when the at least one scene label comprises at least one of a cat-related scene label and a dog-related scene label.

18. The electronic device of claim 10, wherein the computer programs executed by the processor to acquire the shutter speed are executed by the processor to
acquire the shutter speed corresponding to the preset label comprised in the at least one scene label according to preset shutter speeds corresponding to different preset labels.

19. A computer readable storage medium storing computer programs, which when executed by a processor, implement operations of the method of any of claims 1-9.
